# EUROPÄISCHE PATENTSCHRIFT

(11) **EP 4 382 671 B1**
(45) Veröffentlichungstag und Bekanntmachung des Hinweises auf die Patenterteilung: **06.11.2024**
(21) Anmeldenummer: 23207404.7
(22) Anmeldetag: 02.11.2023
(51) Int. Cl.: E01C 19/23, E01C 19/28, E02D 3/026

(54) **BODENBEARBEITUNGSWALZE FÜR EINE BODENBEARBEITUNGSMASCHINE**
SOIL WORKING ROLLER FOR A SOIL WORKING MACHINE
ROULEAU DE TRAITEMENT DU SOL POUR UNE MACHINE DE TRAITEMENT DU SOL

(30) Priorität: 08.12.2022 DE 102022132599
(43) Veröffentlichungstag der Anmeldung: 12.06.2024
(73) Patentinhaber: Hamm AG, 95643 Tirschenreuth (DE)
(72) Erfinder: Bäuml, Stefan, Tirschenreuth (DE)
(74) Vertreter: Ruttensperger Lachnit Trossin Gomoll

(56) Entgegenhaltungen:
- CN-A- 102 494 036
- JP-B2- 5 745 457
- US-B1- 6 386 794

## Beschreibung

Die vorliegende Erfindung betrifft eine Bodenbearbeitungswalze für eine Bodenbearbeitungsmaschine, insbesondere Bodenverdichter, umfassend einen in Richtung einer Walzendrehachse langgestreckten und die Walzendrehachse umgebenden Walzenmantel, zwei in Richtung der Walzendrehachse in Abstand zueinander angeordnete, an eine Innenseite des Walzenmantels angebundene, scheibenartige Trägerelemente und eine in Richtung der Walzendrehachse zwischen den Trägerelementen sich erstreckende und an diese anschließende Umfangswandung, wobei eine Innenoberfläche der Umfangswandung zusammen mit den Trägerelementen ein Schmiermittelaufnahmevolumen begrenzt, wobei in wenigstens einem der Trägerelemente wenigstens eine zu dem Schmiermittelaufnahmevolumen offene Schmiermittelablassöffnung vorgesehen ist, wobei in dem Schmiermittelaufnahmevolumen wenigstens ein Schmiermittelsammelvolumen gebildet ist, wobei das wenigstens eine Schmiermittelsammelvolumen über eine zu diesem offene Schmiermittelablassöffnung entleerbar ist.

Eine derartige Bodenbearbeitungswalze ist aus der JP 5745457 B2 bekannt. Bei dieser bekannten Bodenbearbeitungswalze sind die beiden scheibenartigen Trägerelemente und die zwischen diesen sich erstreckende und an diese anschließende Umfangswandung einstückig als Gussbauteil bereitgestellt. Zum Erreichen einer in Richtung der Walzendrehachse gleichmäßigen Masseverteilung sind die beiden Trägerelemente zueinander unterschiedlich dimensioniert. An der Innenoberfläche der Umfangswandung sind in Umfangsabstand zueinander in Richtung der Walzendrehachse sich erstreckende rippenartige Erhöhungen vorgesehen, welche eine in Richtung der Walzendrehachse abnehmende Vorsprungshöhe über die Innenoberfläche nach radial innen aufweisen.

In einem der scheibenartigen Trägerelemente sind, bezüglich der Walzendrehachse einander diametral gegenüberliegend, Ablassöffnungen vorgesehen, über welche in dem Schmiermittelaufnahmevolumen enthaltenes flüssiges Schmiermittel abgelassen werden kann. Zum Ablassen von Schmiermittel kann eine der Ablassöffnungen in einem in einer Höhenrichtung unteren Bereich, beispielsweise in Höhenrichtung direkt unter der Walzendrehachse, positioniert werden. Unter Schwerkrafteinfluss wird das das Schmiermittelaufnahmevolumen nicht vollständig füllende Schmiermittel sich in einem unteren Bereich des Schmiermittelaufnahmevolumens ansammeln, welcher in diesem Zustand ein Schmiermittelsammelvolumen bereitstellt, zu welchem die in der Höhenrichtung dann unten positionierte Schmiermittelablassöffnung offen ist.

Es ist die Aufgabe der vorliegenden Erfindung, eine derartige Bodenbearbeitungswalze so auszugestalten, dass eine bessere Entleerung des Schmiermittelaufnahmevolumens erreicht wird.

Erfindungsgemäß wird diese Aufgabe gelöst durch eine Bodenbearbeitungswalze für eine Bodenbearbeitungsmaschine, insbesondere Bodenverdichter, umfassend einen in Richtung einer Walzendrehachse langgestreckten und die Walzendrehachse umgebenden Walzenmantel, zwei in Richtung der Walzendrehachse in Abstand zueinander angeordnete, an eine Innenseite des Walzenmantels angebundene, scheibenartige Trägerelemente und eine in Richtung der Walzendrehachse zwischen den Trägerelementen sich erstreckende und an diese anschließende Umfangswandung, wobei eine Innenoberfläche der Umfangswandung zusammen mit den Trägerelementen ein Schmiermittelaufnahmevolumen begrenzt, wobei in wenigstens einem der Trägerelemente wenigstens eine zu dem Schmiermittelaufnahmevolumen offene Schmiermittelablassöffnung vorgesehen ist, wobei in dem Schmiermittelaufnahmevolumen wenigstens ein Schmiermittelsammelvolumen gebildet ist, wobei das wenigstens eine Schmiermittelsammelvolumen über eine zu diesem offene Schmiermittelablassöffnung entleerbar ist.

Die Bodenbearbeitungswalze zeichnet sich dadurch aus, dass zum Bereitstellen des Schmiermittelsammelvolumens:
- die Innenoberfläche der Umfangswandung einen in Richtung der Walzendrehachse auf die zu dem wenigstens einen Schmiermittelsammelvolumen offene Schmiermittelablassöffnung zu zunehmenden Radialabstand zur Walzendrehachse aufweist,
   oder/und
- die Innenoberfläche der Umfangswandung einen in Umfangsrichtung um die Walzendrehachse auf die zu dem wenigstens einen Schmiermittelsammelvolumen offene Schmiermittelablassöffnung zu zunehmenden Radialabstand zur Walzendrehachse aufweist.

Durch das Bereitstellen wenigstens eines beim Ablassen von Schmiermittel aus dem Schmiermittelaufnahmevolumen als Schmiermittelsammelvolumen wirksamen Volumenbereichs des Schmiermittelaufnahmevolumens mit der erfindungsgemäßen Variation des Radialabstands der Innenoberfläche der Umfangswandung wird das Schmiermittel beim Ablassen aus dem Schmiermittelaufnahmevolumen verstärkt in Richtung der zum Ablassen genutzten bzw. offenen Schmiermittelablassöffnung geleitet bzw. verstärkt in einem dieser Schmiermittelablassöffnung naheliegenden Bereich des Schmiermittelaufnahmevolumens angesammelt. Dies hat einerseits zur Folge, dass im Schmiermittel enthaltene Verunreinigungen sich verstärkt in einem Bereich nahe der zum Ablassen genutzten Schmiermittelablassöffnung ansammeln und somit entsprechend verstärkt mit dem über die Schmiermittelablassöffnung abgelassenen Schmiermittel aus dem Schmiermittelaufnahmevolumen ausgetragen werden. Andererseits verringert sich dadurch derjenige Volumenanteil des Schmiermittelaufnahmevolumens, aus welchem auch bei geöffneter Schmiermittelablassöffnung Schmiermittel nicht abströmen kann.

Bei Ausgestaltung der Innenoberfläche der Umfangswandung mit in Richtung der Walzendrehachse auf die zu dem wenigstens einen Schmiermittelsammelvolumen offene Schmiermittelablassöffnung zu zunehmendem Radialabstand zur Walzendrehachse kann insbesondere zum Erreichen einer in Umfangsrichtung gleichmäßigen Masseverteilung die Innenoberfläche der Umfangswandung wenigstens im axialen Bereich des Schmiermittelsammelvolumens bezüglich der Walzendrehachse im Wesentlichen rotationssymmetrisch sein.

Vorteilhafterweise ist dabei vorgesehen, dass die Innenoberfläche der Umfangswandung im Wesentlichen im gesamten axialen Erstreckungsbereich der Umfangswandung im Wesentlichen rotationssymmetrisch ist.

Für eine einfache Herstellbarkeit der Bodenbearbeitungswalze kann bei Ausgestaltung der Innenoberfläche der Umfangswandung mit in Richtung der Walzendrehachse auf die zu dem wenigstens einen Schmiermittelsammelvolumen offene Schmiermittelablassöffnung zu zunehmendem Radialabstand zur Walzendrehachse der Radialabstand in Richtung der Walzendrehachse im Wesentlichen konstant zunehmen. Insbesondere dann, wenn die Innenoberfläche auch rotationssymmetrisch ausgestaltet ist, kann dies zu einer im Wesentlichen kegelartigen bzw. kegelstumpfartigen Geometrie der Innenoberfläche führen.

Bei Ausgestaltung der Innenoberfläche der Umfangswandung mit in Umfangsrichtung um die Walzendrehachse auf die zu dem wenigstens einen Schmiermittelsammelvolumen offene Schmiermittelablassöffnung zu zunehmendem Radialabstand zur Walzendrehachse kann die Innenoberfläche der Umfangswandung wenigstens im axialen Bereich des Schmiermittelsammelvolumens im Wesentlichen zylindrisch sein. Auch dies trägt zu einer einfach realisierbaren Herstellung einer derartigen Bodenbearbeitungswalze bei. Es ist darauf hinzuweisen, dass eine derartige zylindrische Geometrie der Innenoberfläche der Umfangswandung bedeutet, dass diese in gleichen Umfangsbereichen in allen von der zylindrischen Geometrie umfassten axialen Bereichen den gleichen Radialabstand zur Walzendrehachse aufweist. Eine derartige zylindrische Geometrie kann also beispielsweise mit einer kreisrunden Querschnittskontur, einer vieleckförmigen Querschnittskontur, einer elliptischen oder ovalen Querschnittskontur oder dergleichen bereitgestellt sein.

Vorteilhafterweise kann zum Unterstützen der einfachen Herstellbarkeit die Innenoberfläche der Umfangswandung im Wesentlichen im gesamten axialen Erstreckungsbereich der Umfangswandung im Wesentlichen zylindrisch sein.

Bei Ausgestaltung der Innenoberfläche der Umfangswandung mit in Umfangsrichtung um die Walzendrehachse auf die zu dem wenigstens einen Schmiermittelsammelvolumen offene Schmiermittelablassöffnung zu zunehmendem Radialabstand zur Walzendrehachse kann beispielsweise die Innenoberfläche der Umfangswandung wenigstens im axialen Bereich des Schmiermittelsammelvolumens eine vieleckförmige Querschnittskontur aufweisen, wobei wenigstens ein Teil des wenigstens einen Schmiermittelsammelvolumens in einem Eckbereich der vieleckförmigen Querschnittskontur gebildet ist. In einer derartigen vieleckförmigen Querschnittskontur nimmt der Radialabstand zur Walzendrehachse zu jedem Eckbereich zu, so dass dann, wenn ein derartiger Eckbereich in einer Höhenrichtung unten, beispielsweise direkt unter der Walzendrehachse positioniert ist, das im Schmiermittelaufnahmevolumen enthaltene Schmiermittel sich verstärkt in dem als wenigstens ein Teil des Schmiermittelsammelvolumens dann wirksamen Eckbereich der Querschnittsgeometrie der Innenumfangswandung ansammeln und über diesen Volumenbereich und die zu diesem offene Schmiermittelablassöffnung ausströmen kann.

Bei einer alternativen Ausgestaltung der Bodenbearbeitungswalze kann vorgesehen sein, dass bei Ausgestaltung der Innenoberfläche der Umfangswandung mit in Umfangsrichtung um die Walzendrehachse auf die zu dem wenigstens einen Schmiermittelsammelvolumen offene Schmiermittelablassöffnung zu zunehmendem Radialabstand zur Walzendrehachse die Innenoberfläche der Umfangswandung wenigstens im axialen Bereich des Schmiermittelsammelvolumens eine Querschnittskontur mit in einem ersten Umfangserstreckungsbereich im Wesentlichen konstantem Radialabstand zur Walzendrehachse und in einem in beiden Umfangsrichtungen an den ersten Umfangserstreckungsbereich anschließenden zweiten Umfangserstreckungsbereich bis zu einem Abstandsscheitel vorzugsweise kontinuierlich zunehmendem Radialabstand zur Walzendrehachse aufweist, wobei wenigstens ein Teil des wenigstens einen Schmiermittelsammelvolumens im Bereich des Abstandsscheitels gebildet ist. Aufgrund der Bereitstellung des ersten Umfangserstreckungsbereichs mit im Wesentlichen konstantem Radius und einer Radiusvariation nur im zweiten Umfangserstreckungsbereich wird eine in Umfangsrichtung nahezu gleichmäßige Masseverteilung unterstützt.

Bei einer weiteren erfindungsgemäßen Variation kann bei Ausgestaltung der Innenoberfläche der Umfangswandung mit in Umfangsrichtung um die Walzendrehachse auf die zu dem wenigstens einen Schmiermittelsammelvolumen offene Schmiermittelablassöffnung zu zunehmendem Radialabstand zur Walzendrehachse die Innenoberfläche der Umfangswandung wenigstens im axialen Bereich des Schmiermittelsammelvolumens eine Querschnittskontur mit, ausgehend von einem Abstandsminimum, in beiden Umfangsrichtungen zu einem Abstandsscheitel vorzugsweise kontinuierlich zunehmendem Radialabstand zur Walzendrehachse aufweisen, wobei wenigstens ein Teil des wenigstens einen Schmiermittelsammelvolumens im Bereich des Abstandsscheitels gebildet ist.

Insbesondere dann, wenn bei derartiger Ausgestaltung das Abstandsminimum dem Abstandsscheitel bezüglich der Walzendrehachse im Wesentlichen diametral gegenüberliegt, kann eine im Wesentlichen tropfenförmige Querschnittskontur der Innenoberfläche erreicht werden, welche das definierte Ansammeln von Schmiermittel bzw. darin enthaltenen Verunreinigungen in dem bei Durchführung eines Ablassvorgangs in der Höhenrichtung unten positionierten Schmiermittelsammelvolumen unterstützt.

Weiter kann zum Bereitstellen wenigstens eines Teils eines derartigen Schmiermittelsammelvolumens bei Ausgestaltung der Innenoberfläche der Umfangswandung mit in Umfangsrichtung um die Walzendrehachse auf die zu dem wenigstens einen Schmiermittelsammelvolumen offene Schmiermittelablassöffnung zu zunehmendem Radialabstand zur Walzendrehachse die Innenoberfläche der Umfangswandung wenigstens im axialen Bereich des Schmiermittelsammelvolumens eine stufenartige Radialerweiterung aufweisen.

Um für eine einfach zu realisierende Herstellung die Bodenbearbeitungswalze mit umgeformten Blechbauteilen aufbauen zu können, wird vorgeschlagen, dass wenigstens ein wenigstens eine Schmiermittelablassöffnung aufweisendes Trägerelement, vorzugsweise jedes der beiden Trägerelemente, mit der Umfangswandung durch eine in Umfangsrichtung um die Walzendrehachse vorzugsweise unterbrechungsfrei umlaufende Verschweißung verbunden ist. Dadurch wird einerseits ein fester Verbund dieser Bauteile erreicht. Andererseits wird durch die Verschweißung auch ein dichter Abschluss des Schmiermittelaufnahmevolumens gewährleistet.

Aus Stabilitätsgründen kann es erforderlich oder vorteilhaft sein, die Verschweißung wenigstens an einer radialen Innenseite der Umfangswandung zu bilden. Um dabei ein gegenseitiges Stören der Verschweißung mit einer Schmiermittelablassöffnung zu vermeiden, kann die Innenoberfläche der Umfangswandung im Bereich der wenigstens einen Schmiermittelablassöffnung radial außerhalb der wenigstens einen Schmiermittelablassöffnung liegen und einen radialen Abstand zur Schmiermittelablassöffnung aufweisen. Die Höhe dieser Stufe kann dann zumindest der radialen Erstreckung der an der Innenseite der Umfangswandung gebildeten Verschweißung entsprechen, so dass das Vorsehen bzw. Einbringen der Schmiermittelablassöffnung die strukturelle Festigkeit der Verschweißung nicht beeinträchtigt.

Insbesondere dann, wenn die Bodenbearbeitungswalze zum Verdichten von Boden eingesetzt werden soll, kann in dem Schmiermittelaufnahmevolumen eine Unwuchtanordnung mit wenigstens einer um eine Unwuchtdrehachse drehbaren Unwuchtmasse angeordnet sein.

Dabei kann die wenigstens eine Unwuchtmasse an einer in beiden axialen Endbereichen über Lageranordnungen bezüglich der Trägerelemente drehbar gelagerten Unwuchtwelle angeordnet sein, so dass die Lagerstellen zum Schmiermittelaufnahmevolumen offen sind und dort vorgesehene Lager, insbesondere Wälzkörperlager, durch das im Schmiermittelaufnahmevolumen enthaltene Schmiermittel geschmiert und gekühlt werden können.

Die Erfindung betrifft ferner eine Bodenbearbeitungsmaschine, insbesondere Bodenverdichter, umfassend wenigstens eine erfindungsgemäß aufgebaute Bodenbearbeitungswalze.

Die vorliegende Erfindung wird nachfolgend mit Bezug auf die beiliegenden Figuren detailliert beschrieben. Es zeigt:
- Fig. 1: eine Seitenansicht einer als Bodenverdichter ausgebildeten Bodenbearbeitungsmaschine;
- Fig. 2: eine Axialansicht einer Bodenbearbeitungswalze des Bodenverdichters der Fig. 1;
- Fig. 3: eine perspektivische Längsschnittansicht der in Fig. 2 dargestellten Bodenbearbeitungswalze;
- Fig. 4: eine Längsschnittansicht eines mit zwei scheibenartigen Trägerelementen und einer zwischen diesen sich erstreckenden Umfangswand zusammengesetzten Walzenmantels einer Bodenbearbeitungswalze;
- Fig. 5: die in Fig. 4 dargestellte Anordnung in perspektivischer Längsschnittansicht;
- Fig. 6: eine Detailansicht der in den Fig. 4 und 5 gezeigten Anordnung im Bereich VI in Fig. 4;
- Fig. 7: eine Axialansicht einer alternativen Ausgestaltungsart einer Bodenbearbeitungswalze;
- Fig. 8: die Bodenbearbeitungswalze der Fig. 7 im perspektivischen Längsschnitt;
- Fig. 9: eine der Fig. 7 entsprechende Ansicht einer weiteren alternativen Ausgestaltungsart einer Bodenbearbeitungswalze;
- Fig. 10: eine der Fig. 7 entsprechende Ansicht einer weiteren alternativen Ausgestaltungsart einer Bodenbearbeitungswalze;
- Fig. 11: das Detail XI in Fig. 10 vergrößert.

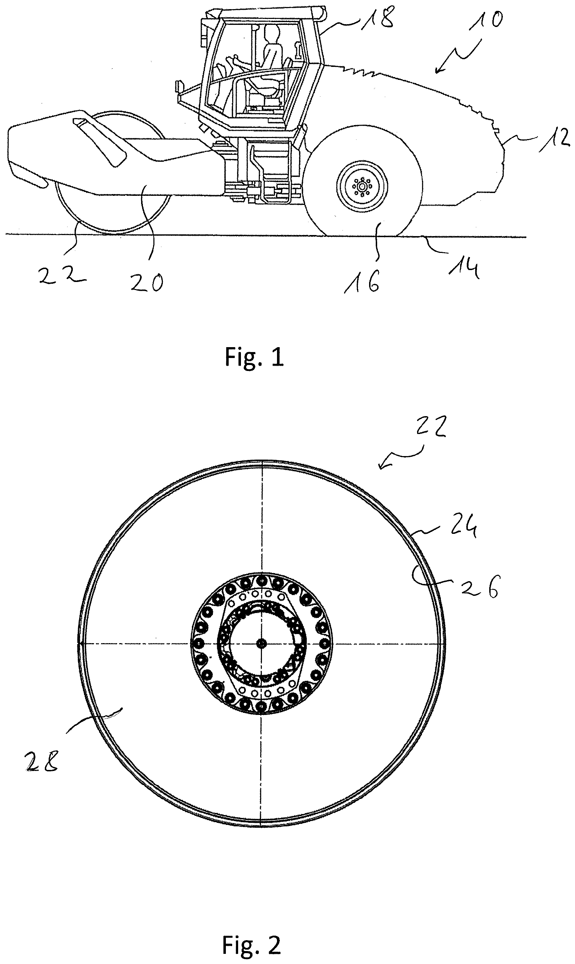

In Fig. 1 ist eine als Bodenverdichter ausgebildete Bodenbearbeitungsmaschine allgemein mit 10 bezeichnet. Diese Bodenbearbeitungsmaschine 10 umfasst einen Hinterwagen 12 mit einem daran vorgesehenen Antriebsaggregat und durch das Antriebsaggregat zum Voranbewegen der Bodenbearbeitungsmaschine 10 auf einem zu bearbeitenden Untergrund 14 antreibbaren Antriebsrädern 16. Am Hinterwagen 12 ist ferner ein Bedienstand 18 für eine die Bodenbearbeitungsmaschine 10 bedienende Bedienperson vorgesehen.

Mit dem Hinterwagen 12 ist ein rahmenartiger Vorderwagen 20 gelenkig verbunden. An dem Vorderwagen 20 ist eine Bodenbearbeitungswalze 22 um eine zur Zeichenebene der Fig. 1 orthogonal stehende Walzendrehachse drehbar getragen.

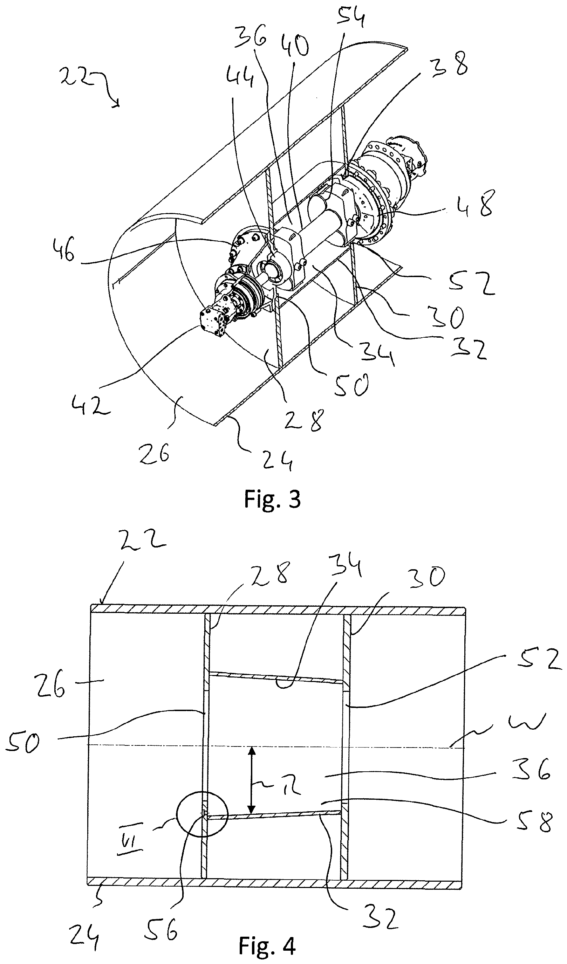

Der prinzipielle Aufbau einer derartigen Bodenbearbeitungswalze 22 ist in den Fig. 2 und 3 zu erkennen. Die Bodenbearbeitungswalze 22 umfasst einen bezüglich der Walzendrehachse zylindrischen Walzenmantel 24. An einer Innenseite 26 des Walzenmantels 24 sind in axialem Abstand zueinander zwei allgemein auch als Ronden bezeichnete scheibenartige Trägerelemente 28, 30 durch Verschweißung fest angebunden. Axial zwischen den beiden Trägerelementen 28, 30 erstreckt sich eine rohrartige Umfangswandung 32, die in ihren beiden axialen Endbereichen durch Verschweißung an die Trägerelemente 28, 30 angebunden ist. Eine Innenoberfläche 34 der Umfangswandung 32 begrenzt zusammen mit den Trägerelementen 28, 30 ein Schmiermittelaufnahmevolumen 36, welches teilweise mit einem flüssigen Schmiermittel, beispielsweise Schmieröl, gefüllt ist.

In dem Schmiermittelaufnahmevolumen ist eine allgemein mit 38 bezeichnete Unwuchtanordnung angeordnet. Die Unwuchtanordnung 38 umfasst eine Unwuchtwelle 40, die im dargestellten Beispiel durch einen Unwuchtantriebsmotor 42 zur Drehung um eine Unwuchtdrehachse, beispielsweise die Walzendrehachse, angetrieben werden kann. In ihren beiden axialen Endbereichen ist die Unwuchtwelle 40 über Lager 44 an Trägereinheiten 46, 48 drehbar gelagert. Die Trägereinheiten 46, 48 sind in den Trägerelementen 28, 30 gebildete zentrale Öffnungen 50, 52 eingesetzt und durch Verschraubung an den Trägerelementen 28, 30 festgelegt, so dass über die Lager 44 und die Trägereinheiten 46, 48 die Unwuchtwelle 40 bezüglich der Trägerelemente 28, 30 abgestützt und drehbar gelagert ist. An der Unwuchtwelle 40 ist zumindest eine Unwuchtmasse 54 angeordnet, die einen zur Unwuchtdrehachse exzentrischen Massenschwerpunkt aufweist. Durch Rotation der Unwuchtwelle 40 und damit der wenigstens einen Unwuchtmasse 54 wird eine zur Walzendrehachse orthogonal orientierte Kraft bzw. Beschleunigung auf die Bodenbearbeitungswalze 22 ausgeübt, so dass diese für einen verbesserten Verdichtungsbetrieb in eine Vibrationsbewegung versetzt wird.

Es ist darauf hinzuweisen, dass vorangehend mit Bezug auf die Fig. 1 bis 3 der grundsätzliche Aufbau einer Bodenbearbeitungsmaschine 10 bzw. einer Bodenbearbeitungswalze 22 derselben beschrieben wurde. Die Ausgestaltung einer derartigen Bodenbearbeitungsmaschine 10 bzw. Bodenbearbeitungswalze 22 kann in verschiedenen Aspekten von der vorangehend beschriebenen Ausgestaltung abweichen. So könnte beispielsweise auch am Hinterwagen 12 eine derartige Bodenbearbeitungswalze vorgesehen sein. Die Unwuchtanordnung 38 könnte mehrere zur Walzendrehachse exzentrische und im Umfangsabstand zueinander angeordnete Unwuchtwellen mit daran vorgesehenen Unwuchtmassen aufweisen.

Die Fig. 4 bis 6 zeigen detaillierter die Bodenbearbeitungswalze 22 bzw. den Walzenmantel 24 mit den an die Innenseite 26 desselben angebundenen scheibenartigen Trägerelementen 28, 30 und der zwischen diesen in Richtung der Walzendrehachse W sich erstreckenden Umfangswandung 32. In dem in Fig. 4 links erkennbaren Trägerelement 28 ist in einem Umfangsbereich eine Schmiermittelablassöffnung 56 vorgesehen. Vermittels eines in den Figuren nicht dargestellten und beispielsweise in die Schmiermittelablassöffnung 56 einschraubbaren Abschlusselements kann die Schmiermittelablassöffnung 56 abgeschlossen werden, so dass im Schmiermittelaufnahmevolumen 36 enthaltenes Schmiermittel am Ausströmen aus dem Schmiermittelaufnahmevolumen 36 gehindert ist.

Da das Schmiermittelaufnahmevolumen 36 nicht vollständig mit Schmiermittel gefüllt ist, wird insbesondere bei stillstehender Bodenbearbeitungsmaschine 10 das Schmiermittel sich in einem unteren Bereich des Schmiermittelaufnahmevolumens 36 ansammeln. Soll das Schmiermittel beispielsweise zum Ersetzen durch frisches Schmiermittel aus dem Schmiermittelaufnahmevolumen 36 abgelassen werden, kann so vorgegangen werden, dass die Schmiermittelablassöffnung 56 in einer Höhenrichtung unten, vorzugsweise im Wesentlichen direkt unter der Walzendrehachse W positioniert wird. Das Schmiermittel wird sich dann in einem in diesem Zustand als Schmiermittelsammelvolumen 58 wirksamen Bereich des Schmiermittelaufnahmevolumens 36 ansammeln. Wird in diesem Zustand das Abschlusselement von der Schmiermittelablassöffnung 56 entfernt, kann das Schmiermittel aus dem Schmiermittelsammelvolumen 58 abfließen und dabei auch im Schmiermittel enthaltene Verunreinigungen aus dem Schmiermittelaufnahmevolumen 36 heraustragen.

Um dabei ein möglichst vollständiges Abfließen des Schmiermittels aus dem Schmiermittelaufnahmevolumen 36 bzw. dem in diesem Zustand als Schmiermittelsammelvolumen 58 wirksamen Bereich desselben zu ermöglichen, ist die Umfangswandung 32 so gestaltet, dass diese einen in Richtung der Walzendrehachse W auf das die Schmiermittelablassöffnung 56 aufweisende Trägerelement 28 zu zunehmenden Radialabstand R zur Walzendrehachse W aufweist. Vorteilhafterweise weist die Umfangswandung 32 dabei in ihrem gesamten Erstreckungsbereich zwischen den beiden Trägerelementen 28, 30 einen zunehmenden Radialabstand R auf, wobei, bezogen auf jeden axialen Bereich, der Radialabstand R in Umfangsrichtung konstant sein kann, so dass die Umfangswandung 32 bzw. die Innenoberfläche 34 derselben im Wesentlichen rotationssymmetrisch bezüglich der Walzendrehachse W ausgebildet ist und beispielsweise eine kegelstumpfartige Geometrie aufweisen kann. Es ist darauf hinzuweisen, dass eine derartige Ausgestaltung sich bei Aufbau der Umfangswandung 32 beispielsweise als Blechumformteil auf die Umfangswandung 32 insgesamt bezieht. Für die Zwecke der vorliegenden Erfindung ist es jedoch von Bedeutung, dass die Variation des Radialabstandes R in Richtung der Walzendrehachse insbesondere an der Innenoberfläche 34 der Umfangswandung 32 vorhanden ist.

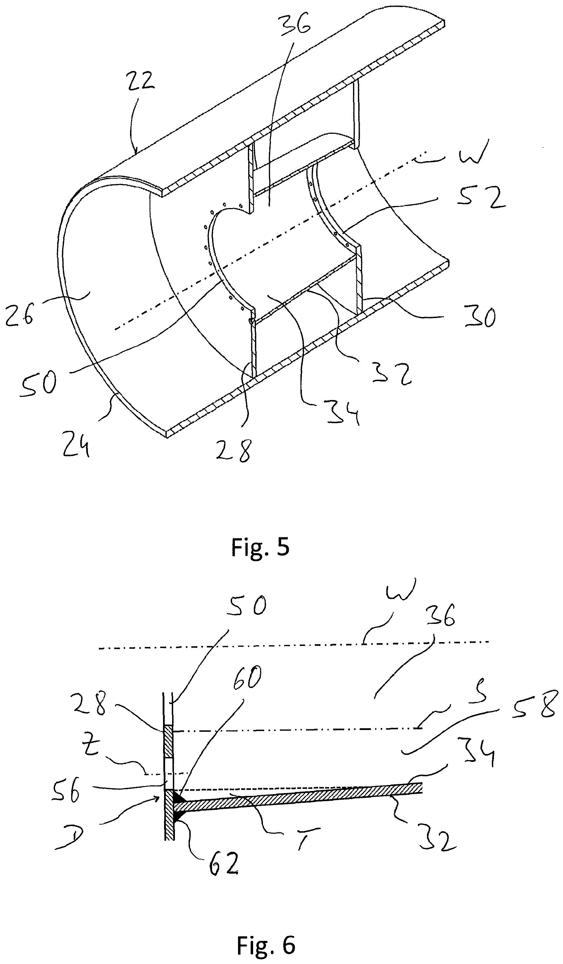

In Fig. 6 ist zu erkennen, dass in demjenigen Bereich, in welchem die Umfangswandung 32 an das die Schmiermittelablassöffnung 56 aufweisende Trägerelement 28 anschließt, im Umfangsbereich der Schmiermittelablassöffnung, insbesondere in einem Umfangsbereich, in welchem das Zentrum Z der Schmiermittelablassöffnung 56 liegt, die Innenoberfläche 34 der Umfangswandung 32 einen radialen Abstand D zur Schmiermittelablassöffnung 56 aufweist und außerhalb der Schmiermittelablassöffnung 56 liegt. Dies bedeutet, dass im Übergang von der Innenoberfläche 34 der Umfangswandung 32 zur Schmiermittelablassöffnung 56 eine Stufe mit einer dem Abstand D entsprechenden radialen Höhe gebildet ist. Somit ist gewährleistet, dass die Umfangswandung 32 vermittels einer an einer Innenseite derselben gebildeten Verschweißung 60 an das Trägerelement 58 angebunden werden kann. Aus Stabilitätsgründen kann es auch vorteilhaft sein, auch an einer Außenseite der Umfangswandung 32 eine derartige in Umfangsrichtung um die Walzendrehachse B vollständig umlaufende Verschweißung 62 vorzusehen.

Durch das Vorsehen des Abstandes D zwischen der Schmiermittelablassöffnung 56 und der Innenoberfläche 34 der Umfangswandung 32 ist gewährleistet, dass bei Einbringen der Schmiermittelablassöffnung 56 nach dem Verbinden der Umfangswandung 32 mit dem Trägerelement 28 die Verschweißung 60 nicht beschädigt wird.

Aufgrund der Ausgestaltung der Umfangswandung 32 mit in Richtung der Walzendrehachse W zunehmendem Radialabstand R der Innenoberfläche 34 wird ein durch die dem Abstand D entsprechende Stufe gebildetes Totvolumen T, aus welchem auch bei geöffneter Schmiermittelablassöffnung 56 das Schmiermittel S nicht abfließen kann, minimiert. Dieses Totvolumen T erstreckt sich, ausgehend von dem Trägerelement 28, in Richtung der Walzendrehachse W nur so weit, bis der Radialabstand R zwischen der Innenoberfläche 34 der Umfangswandung 32 und der Walzendrehachse W dem Abstand des radial äußersten Bereichs der Schmiermittelablassöffnung 56 zur Walzendrehachse W entspricht. Das Ausdehnen eines derartigen Totvolumens T über die gesamte axiale Länge der Umfangswandung 32 wird somit vermieden. Dies hat zur Folge, dass ein erheblich größerer Anteil von in dem Schmiermittel S enthaltenen Verunreinigungen aus dem Schmiermittelaufnahmevolumen 36 ausgetragen werden kann und, trotz der im Übergang zwischen der Innenoberfläche 34 und dem Trägerelement 28 zur Schmiermittelablassöffnung 56 gebildeten Stufe nur ein vergleichsweise geringer Anteil an Schmiermittel S im Schmiermittelaufnahmevolumen 36 bzw. dem für den Ablassvorgang genutzten Schmiermittelsammelvolumen 58 verbleibt.

Es ist darauf hinzuweisen, dass selbstverständlich in dem Trägerelement 28 an mehreren Umfangsbereichen derartige Schmiermittelablassöffnungen 56 vorgesehen sein können. Jede dieser Schmiermittelablassöffnungen 56 kann dann bei einem Ablassvorgang in Verbindung mit einem jeweils zugeordneten und als Schmiermittelsammelvolumen 58 wirksamen Volumenbereich des Schmiermittelaufnahmevolumens 36 zum Ablassen von Schmiermittel aus dem Schmiermittelaufnahmevolumen 36 genutzt werden.

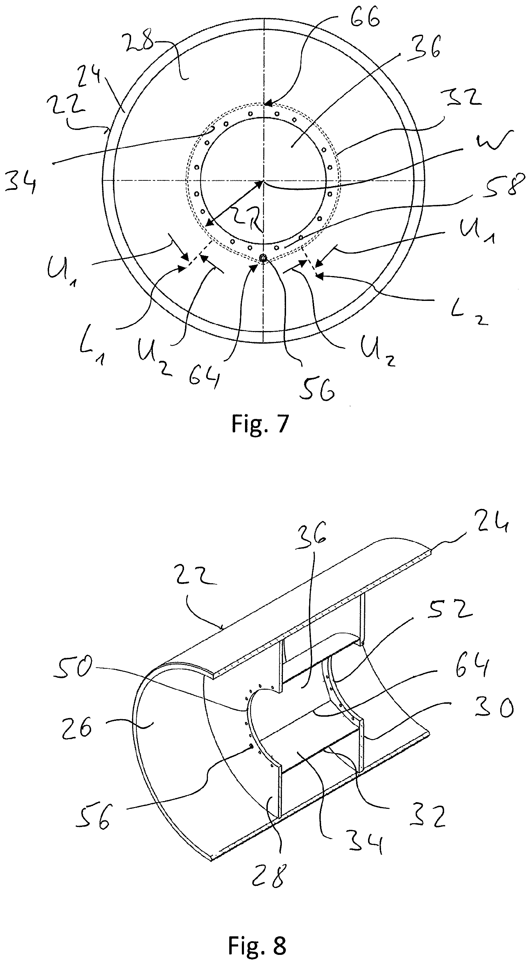

Eine alternative Ausgestaltung einer Bodenbearbeitungswalze 22 ist in den Fig. 7 und 8 dargestellt. Auch bei dieser Ausgestaltung ist zur Zusammenwirkung mit einer an dem Trägerelement 28 vorgesehenen Schmiermittelablassöffnung 56 ein Schmiermittelsammelvolumen 58 gebildet, wenn die Schmiermittelablassöffnung 56 in Höhenrichtung unten, also im Wesentlichen vertikal unter der Walzendrehachse W positioniert ist, in welchem Schmiermittel und darin enthaltene Verunreinigungen sich verstärkt ansammeln und beim Ablassen in Richtung zur Schmiermittelablassöffnung 56 bewegen können.

Bei der in den Fig. 7 und 8 dargestellten Ausgestaltungsform ist die Umfangswandung 32 bzw. deren Innenoberfläche 34 im Wesentlichen zylindrisch ausgestaltet und weist somit in allen axialen Bereichen im Wesentlichen die gleiche Querschnittsgeometrie und Querschnittsfläche auf. Der Radialabstand R der Innenoberfläche 34 variiert bezüglich der Walzendrehachse W in axialer Richtung im Wesentlichen nicht. Eine Variation des Radialabstandes R ist in Umfangsrichtung um die Walzendrehachse W vorgesehen.

Bei der in den Fig. 7 und 8 dargestellten Ausgestaltungsform ist die Umfangswandung 32 bzw. deren Innenoberfläche 34 in zwei durch Trennlinien L₁ bzw. L₂ getrennte bzw. in diesen Bereichen ineinander übergehende Umfangserstreckungsbereiche U₁ und U₂ unterteilt. Im ersten Umfangserstreckungsbereich U₁, welcher, was die Fig. 7 veranschaulicht, den größeren Teil der Umfangserstreckung der Umfangswandung 32 bzw. der Innenoberfläche 34 derselben einnimmt, weist die Innenoberfläche 34 in Umfangsrichtung im Wesentlichen einen konstanten Radialabstand R zur Walzendrehachse W auf. Im zweiten Umfangserstreckungsbereich U₂ nimmt der Radialabstand R, ausgehend vom jeweiligen Angrenzungsbereich an den ersten Umfangserstreckungsbereich U₁, bis zu einem Abstandsscheitel 64 im Wesentlichen kontinuierlich zu. Im Bereich des Abstandsscheitels 64 weist die Innenoberfläche 34 ihren maximalen Radialabstand R zur Walzendrehachse W auf. Im Bereich dieses Abstandsscheitels 64 ist radial innerhalb der Umfangswandung 32 die Schmiermittelablassöffnung 56 angeordnet. Auch hierbei kann die Schmiermittelablassöffnung 56 die vorangehend mit Bezug auf die Fig. 6 dargestellte Positionierung bezüglich der Innenoberfläche 34 der Umfangswandung 32 mit dem Abstand D aufweisen, insbesondere wenn die Umfangswandung 32 vermittels der an der Innenseite derselben verlaufenden Verschweißung 60 an das Trägerelement 28 angebunden ist.

Durch das Bereitstellen des Abstandsscheitels 64 wird im Vergleich zu einer über den gesamten Umfang kreisrunden Ausgestaltung der Umfangswandung 32 bzw. der Innenoberfläche 34 derselben dann, wenn bei Durchführen eines Ablassvorgangs der Umfangsscheitel 64 und mit diesem die Schmiermittelablassöffnung 56 in der Höhenrichtung möglichst weit unten, also beispielsweise direkt unter der Walzendrehachse W angeordnet werden, derjenige Bereich, in welchem das im Schmiermittelaufnahmevolumen 36 enthaltene Schmiermittel S und darin enthaltene Verunreinigungen sich ansammeln werden, in Umfangsrichtung weniger weit ausgedehnt sein. Dies trifft insbesondere auch auf den durch das Bereitstellen der vorangehend angesprochenen Stufe entstehenden Totvolumen zu. Dieser weist im Vergleich zur Ausgestaltung der Innenoberfläche 34 mit kreisrunder Querschnittskontur eine deutlich geringere Umfangserstreckung auf. Beim Ablassen von Schmiermittel 56 verbleibt ein wesentlich geringerer Anteil des Schmiermittels und damit auch ein wesentlich geringerer Anteil an Verunreinigungen in dem so gebildeten Totvolumen, bzw. es wird in dem dann im Bereich der Schmiermittelablassöffnung 56 gebildeten Schmiermittelsammelvolumen 58 beim Ablassen von Schmiermittel dieses verstärkt angesammelt, so dass darin enthaltene Verunreinigungen verstärkt aus dem Schmiermittelaufnahmevolumen 36 ausgetragen werden können.

Es ist darauf hinzuweisen, dass die vorangehend mit Bezug auf die Fig. 7 und 8 beschriebene Ausgestaltungsform beispielsweise auch dahingehend variiert werden kann, dass eine Variation des Radialabstandes R im Wesentlichen über den gesamten Umfangsbereich der Innenoberfläche 34 vorliegt. Beispielsweise kann im Bereich eines dem Abstandsscheitel 64 bezüglich der Walzendrehachse W diametral gegenüberliegenden Abstandsminimums 66 die Innenoberfläche 32 einen minimalen Abstand zur Walzendrehachse W aufweisen, der dann in beiden Umfangsrichtungen in Richtung zum Abstandsscheitel 64 im Wesentlichen kontinuierlich und in beiden Umfangsrichtungen beispielsweise gleichmäßig zunehmen kann. Dies führt zu einer im Wesentlichen tropfenförmigen Querschnittskontur der Innenoberfläche 34, welche gleichwohl in Richtung der Walzendrehachse W konstant sein kann, so dass wiederum die zylindrische Geometrie der Innenoberfläche 34 erhalten wird.

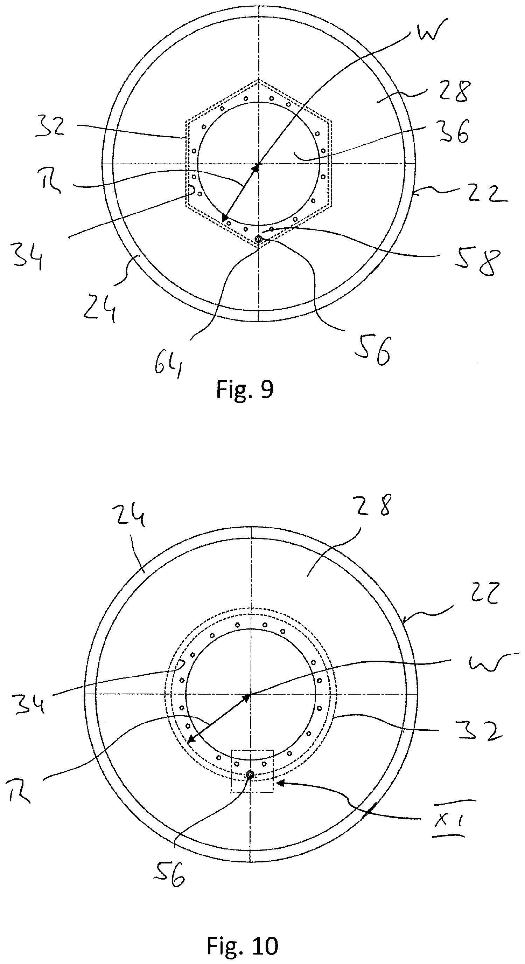

Eine weitere Abwandlung dieser Ausgestaltungsform ist in Fig. 9 dargestellt. Bei dieser Ausgestaltungsform weist die Umfangswandung 32 bzw. deren Innenoberfläche 34 eine vieleckförmige, hier sechseckige, Querschnittsgeometrie auf. Dies bedeutet, dass es über den Umfang verteilt eine Mehrzahl von Abstandsscheiteln 64 gibt. Zwischen jeweils zwei in Umfangsrichtung unmittelbar benachbarten Abstandsscheiteln 64 variiert der Radialabstand R der Innenoberfläche 34 zur Walzendrehachse W. Im Bereich von zumindest einem dieser Abstandsscheitel 64 ist eine Schmiermittelablassöffnung 56 vorgesehen, so dass dann, wenn dieser Abstandsscheitel 64 mit der in Zuordnung dazu vorgesehenen Schmiermittelablassöffnung 56 in der Höhenrichtung möglichst weit unten, also beispielsweise vertikal direkt unter der Walzendrehachse W angeordnet ist, so wie dies in Fig. 9 veranschaulicht ist, das Schmiermittel sich in dem in Zuordnung zu der Schmiermittelablassöffnung 56 bzw. im Bereich des Abstandsscheitels 64 dann gebildeten Schmiermittelsammelvolumen 58 ansammeln kann und nahezu vollständig aus dem Schmiermittelaufnahmevolumen 36 ausströmen kann.

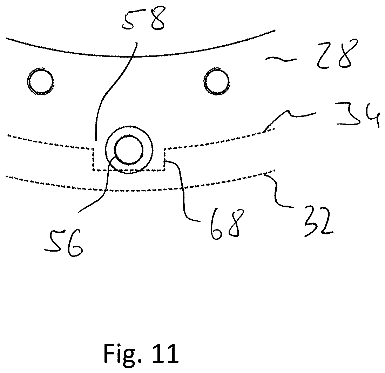

Eine weitere Variation dieses Ausgestaltungsprinzips ist in den Fig. 10 und 11 gezeigt. Bei dieser Ausgestaltung weist die Umfangswandung 32 bzw. deren Innenoberfläche 34 nahezu über den gesamten Umfang um die Walzendrehachse W einen im Wesentlichen konstanten Radialabstand R auf. In demjenigen Umfangsbereich, in welchem die Schmiermittelablassöffnung 56 in dem Trägerelement 28 vorgesehen ist, ist an der Innenumfangsfläche 34 eine stufenartige Radialerweiterung 68 gebildet. Auch bei dieser Ausgestaltungsform kann die Geometrie der Innenoberfläche 34 derart sein, dass diese über die gesamte axiale Ausdehnung der Umfangswandung 32 im Wesentlichen konstant, also zylindrisch ist.

Durch das Bereitstellen der stufenartigen Radialerweiterung 68 ist in demjenigen Umfangsbereich, in welchem die Schmiermittelablassöffnung 56 im Trägerelement 28 vorgesehen ist, bei Durchführung eines Ablassvorgangs ein Schmiermittelsammelbereich 58 gebildet, in welchem Schmiermittel und Verunreinigungen sich verstärkt und insbesondere am Ende eines Ablassvorgangs auf einen vergleichsweise kleinen Umfangsbereich begrenzt ansammeln, so dass auch dann, wenn das vorangehend mit Bezug auf die Fig. 6 erläuterte Totvolumen erzeugt wird, die Menge des in dem Schmiermittelsammelvolumen 58 noch verbleibenden Schmiermittels vergleichsweise gering ist.

Abschließend ist darauf hinzuweisen, dass selbstverständlich vorangehend mit Bezug auf die Figuren erläuterte Ausgestaltungsaspekte miteinander kombiniert werden können. So könnte die Umfangswandung an ihrer Innenoberfläche einen sowohl in axialer Richtung, als auch in Umfangsrichtung variierenden und in Richtung zu einem Bereich, in welchem in einem Trägerelement eine Schmiermittelablassöffnung vorgesehen ist, zunehmenden Radialabstand zur Walzendrehachse aufweisen. Der besonders vorteilhafte Effekt der vorliegenden Erfindung mit der verstärkten Ansammlung von Schmiermittel bzw. Verunreinigungen in einem Umfangsbereich bzw. einem axialen Bereich, in welchem eine Schmiermittelablassöffnung vorgesehen ist, kann auch dann genutzt werden, wenn die Schmiermittelablassöffnung in radialer Richtung unmittelbar an die Innenoberfläche der Umfangswandung anschließt. Dies kann beispielsweise dann der Fall sein, wenn das Vorsehen einer Verschweißung an der Innenseite der Umfangswandung nicht erforderlich ist und durch die an der Außenseite vorgesehene Verschweißung eine ausreichend stabile und insbesondere einen dichten Abschluss gewährleistende Verbindung erreicht werden kann. Das Entstehen eines Totvolumens kann dabei vollständig vermieden werden.

Grundsätzlich könnte, wie dies die Fig. 11 auch andeutet, die Schmiermittelablassöffnung sich mit der Umfangswandung radial überlappend angeordnet sein, beispielsweise dadurch, dass die Schmiermittelablassöffnung nach dem Verbinden der Umfangswandung mit dem Trägerelement durch Bohren in das Trägerelement eingebracht wird. Eine derartige Bohrung kann dann bis in einen axialen Bereich der Umfangswandung eingebracht werden, so dass, beschränkt auf diesen axialen Bereich der Umfangswandung, durch die die Umfangswandung auch erfassende Bohrung die vorangehend mit Bezug auf die Fig. 11 beschriebene stufenartige, in diesem Falle abgerundet stufenartige, radiale Erweiterung der Innenoberfläche der Umfangswandung erhalten werden kann. Auch in diesem Bereich kann beim Ablassen von Schmiermittel aus dem Schmiermittelaufnahmevolumen insbesondere am Ende eines Ablassvorgangs das im Schmiermittelsammelvolumen vorhandene Schmiermittel im Wesentlichen vollständig aus dem Schmiermittelaufnahmevolumen abgeleitet werden, so dass nahezu keine Rückstände im Schmiermittelaufnahmevolumen verbleiben.

## Patentansprüche

1. Bodenbearbeitungswalze für eine Bodenbearbeitungsmaschine, insbesondere Bodenverdichter, umfassend einen in Richtung einer Walzendrehachse (W) langgestreckten und die Walzendrehachse (W) umgebenden Walzenmantel (24), zwei in Richtung der Walzendrehachse (W) in Abstand zueinander angeordnete, an eine Innenseite (26) des Walzenmantels (24) angebundene, scheibenartige Trägerelemente (28, 30) und eine in Richtung der Walzendrehachse (W) zwischen den Trägerelementen (28, 30) sich erstreckende und an diese anschließende Umfangswandung (32), wobei eine Innenoberfläche (34) der Umfangswandung (32) zusammen mit den Trägerelementen (28, 30) ein Schmiermittelaufnahmevolumen (36) begrenzt, wobei in wenigstens einem der Trägerelemente (28, 30) wenigstens eine zu dem Schmiermittelaufnahmevolumen (36) offene Schmiermittelablassöffnung (56) vorgesehen ist, wobei in dem Schmiermittelaufnahmevolumen (36) wenigstens ein Schmiermittelsammelvolumen (58) gebildet ist, wobei das wenigstens eine Schmiermittelsammelvolumen (58) über eine zu diesem offene Schmiermittelablassöffnung (56) entleerbar ist,
**dadurch gekennzeichnet, dass** zum Bereitstellen des Schmiermittelsammelvolumens (58):
- die Innenoberfläche (34) der Umfangswandung (32) einen in Richtung der Walzendrehachse (W) auf die zu dem wenigstens einen Schmiermittelsammelvolumen (58) offene Schmiermittelablassöffnung (56) zu zunehmenden Radialabstand (R) zur Walzendrehachse (W) aufweist,
oder/und
- die Innenoberfläche (34) der Umfangswandung (32) einen in Umfangsrichtung um die Walzendrehachse (W) auf die zu dem wenigstens einen Schmiermittelsammelvolumen (58) offene Schmiermittelablassöffnung (56) zu zunehmenden Radialabstand (R) zur Walzendrehachse (W) aufweist.

2. Bodenbearbeitungswalze nach Anspruch 1,
**dadurch gekennzeichnet, dass** bei Ausgestaltung der Innenoberfläche (34) der Umfangswandung (32) mit in Richtung der Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) die Innenoberfläche (34) der Umfangswandung (32) wenigstens im axialen Bereich des Schmiermittelsammelvolumens (58) bezüglich der Walzendrehachse (W) im Wesentlichen rotationssymmetrisch ist.

3. Bodenbearbeitungswalze nach Anspruch 2,
**dadurch gekennzeichnet, dass** die Innenoberfläche (34) der Umfangswandung (32) im Wesentlichen im gesamten axialen Erstreckungsbereich der Umfangswandung (32) im Wesentlichen rotationssymmetrisch ist.

4. Bodenbearbeitungswalze nach einem der Ansprüche 1-3,
**dadurch gekennzeichnet, dass** bei Ausgestaltung der Innenoberfläche (34) der Umfangswandung (32) mit in Richtung der Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) der Radialabstand (R) in Richtung der Walzendrehachse (W) im Wesentlichen konstant zunimmt.

5. Bodenbearbeitungswalze nach einem der Ansprüche 1-4,
**dadurch gekennzeichnet, dass** bei Ausgestaltung der Innenoberfläche (34) der Umfangswandung (32) mit in Umfangsrichtung um die Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) die Innenoberfläche (34) der Umfangswandung (32) wenigstens im axialen Bereich des Schmiermittelsammelvolumens (58) im Wesentlichen zylindrisch ist.

6. Bodenbearbeitungswalze nach Anspruch 5,
**dadurch gekennzeichnet, dass** die Innenoberfläche (34) der Umfangswandung (32) im Wesentlichen im gesamten axialen Erstreckungsbereich der Umfangswandung (32) im Wesentlichen zylindrisch ist.

7. Bodenbearbeitungswalze nach einem der Ansprüche 1-6,
**dadurch gekennzeichnet, dass** bei Ausgestaltung der Innenoberfläche (34) der Umfangswandung (32) mit in Umfangsrichtung um die Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) die Innenoberfläche (34) der Umfangswandung (32) wenigstens im axialen Bereich des Schmiermittelsammelvolumens (58) eine vieleckförmige Querschnittskontur aufweist, wobei wenigstens ein Teil des wenigstens einen Schmiermittelsammelvolumens (58) in einem Eckbereich der vieleckförmigen Querschnittskontur gebildet ist.

8. Bodenbearbeitungswalze nach einem der Ansprüche 1-6,
**dadurch gekennzeichnet, dass** bei Ausgestaltung der Innenoberfläche (34) der Umfangswandung (32) mit in Umfangsrichtung um die Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) die Innenoberfläche (34) der Umfangswandung (32) wenigstens im axialen Bereich des Schmiermittelsammelvolumens (58) eine Querschnittskontur mit in einem ersten Umfangserstreckungsbereich (U₁) im Wesentlichen konstantem Radialabstand (R) zur Walzendrehachse (W) und in einem in beiden Umfangsrichtungen an den ersten Umfangserstreckungsbereich (U₁) anschließenden zweiten Umfangserstreckungsbereich (U₂) bis zu einem Abstandsscheitel (64) vorzugsweise kontinuierlich zunehmendem Radialabstand (R) zur Walzendrehachse (W) aufweist, wobei wenigstens ein Teil des wenigstens einen Schmiermittelsammelvolumens (58) im Bereich des Abstandsscheitels (64) gebildet ist.

9. Bodenbearbeitungswalze nach einem der Ansprüche 1-6,
**dadurch gekennzeichnet, dass** bei Ausgestaltung der Innenoberfläche (34) der Umfangswandung (32) mit in Umfangsrichtung um die Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) die Innenoberfläche (34) der Umfangswandung (32) wenigstens im axialen Bereich des Schmiermittelsammelvolumens (58) eine Querschnittskontur mit, ausgehend von einem Abstandsminimum (66), in beiden Umfangsrichtungen zu einem Abstandsscheitel (64) vorzugsweise kontinuierlich zunehmendem Radialabstand (R) zur Walzendrehachse (W) aufweist, wobei wenigstens ein Teil des wenigstens einen Schmiermittelsammelvolumens (58) im Bereich des Abstandsscheitels (64) gebildet ist.

10. Bodenbearbeitungswalze nach Anspruch 9,
**dadurch gekennzeichnet, dass** das Abstandsminimum (66) dem Abstandsscheitel (64) bezüglich der Walzendrehachse (W) im Wesentlichen diametral gegenüberliegt.

11. Bodenbearbeitungswalze nach einem der Ansprüche 1-10,
**dadurch gekennzeichnet, dass** bei Ausgestaltung der Innenoberfläche (34) der Umfangswandung (32) mit in Umfangsrichtung um die Walzendrehachse (W) auf die zu dem wenigstens einen Schmiermittelsammelvolumen (58) offene Schmiermittelablassöffnung (56) zu zunehmendem Radialabstand (R) zur Walzendrehachse (W) die Innenoberfläche (34) der Umfangswandung (32) wenigstens im axialen Bereich des Schmiermittelsammelvolumens (58) zum Bereitstellen wenigstens eines Teils des wenigstens einen Schmiermittelsammelvolumens (58) eine stufenartige Radialerweiterung (68) aufweist.

12. Bodenbearbeitungswalze nach einem der Ansprüche 1-11,
**dadurch gekennzeichnet, dass** wenigstens ein wenigstens eine Schmiermittelablassöffnung (56) aufweisendes Trägerelement (28, 30) mit der Umfangswandung (32) durch eine in Umfangsrichtung um die Walzendrehachse (W) vorzugsweise unterbrechungsfrei umlaufende Verschweißung (60, 62) verbunden ist.

13. Bodenbearbeitungswalze nach Anspruch 12,
**dadurch gekennzeichnet, dass** die Verschweißung (60) wenigstens an einer radialen Innenseite der Umfangswandung (32) gebildet ist, und dass die Innenoberfläche (34) der Umfangswandung (32) im Bereich der wenigstens einen Schmiermittelablassöffnung (56) radial außerhalb der wenigstens einen Schmiermittelablassöffnung (56) liegt und einen radialen Abstand (D) zur Schmiermittelablassöffnung (56) aufweist.

14. Bodenbearbeitungswalze nach einem der Ansprüche 1-13,
**dadurch gekennzeichnet, dass** in dem Schmiermittelaufnahmevolumen (36) eine Unwuchtanordnung (38) mit wenigstens einer um eine Unwuchtdrehachse drehbaren Unwuchtmasse (54) angeordnet ist.

15. Bodenbearbeitungswalze nach Anspruch 14,
**dadurch gekennzeichnet, dass** die wenigstens eine Unwuchtmasse (54) an einer in beiden axialen Endbereichen über Lageranordnungen (44) bezüglich der Trägerelemente (28, 30) drehbar gelagerten Unwuchtwelle (40) angeordnet ist.

16. Bodenbearbeitungsmaschine, insbesondere Bodenverdichter, umfassend wenigstens eine Bodenbearbeitungswalze (22) nach einem der vorangehenden Ansprüche.

## Claims

1. A soil processing roller for a soil processing machine, in particular a soil compactor, comprising a roller shell (24) which is elongated in the direction of a roller axis of rotation (W) and surrounds the roller axis of rotation (W), two disk-like support elements (28, 30) arranged at a distance from one another in the direction of the roller axis of rotation (W) and connected to an inner side (26) of the roller shell (24), and a circumferential wall (32) extending in the direction of the roller axis of rotation (W) between the support elements (28, 30) and adjoining the same, wherein an inner surface (34) of the circumferential wall (32) together with the support elements (28, 30) delimits a lubricant receiving volume (36), wherein, in at least one of the support elements (28, 30), at least one lubricant drain opening (56) is provided, which is open to the lubricant receiving volume (36), wherein at least one lubricant collecting volume (58) is formed in the lubricant receiving volume (36), wherein the at least one lubricant collecting volume (58) can be emptied via a lubricant drain opening (56) that is open to the same,
**characterized in that,** to provide the lubricant collecting volume (58):
- the inner surface (34) of the circumferential wall (32) has a radial distance (R) from the roller axis of rotation (W) which increases in the direction of the roller axis of rotation (W) toward the lubricant drain opening (56) which is open to the at least one lubricant collecting volume (58),
and/or
- the inner surface (34) of the circumferential wall (32) has a radial distance (R) from the roller axis of rotation (W) which increases in the circumferential direction around the roller axis of rotation (W) toward the lubricant drain opening (56) which is open to the at least one lubricant collecting volume (58).

2. The soil processing roller according to claim 1,
**characterized in that,** when designing the inner surface (34) of the circumferential wall (32) with a radial distance (R) from the roller axis of rotation (W) which increases in the direction of the roller axis of rotation (W) toward the lubricant drain opening (56) open to the at least one lubricant collecting volume (58), the inner surface (34) of the circumferential wall (32) can be essentially rotationally symmetrical with respect to the roller axis of rotation (W), at least in the axial region of the lubricant collecting volume (58).

3. The soil processing roller according to claim 2,
**characterized in that** the inner surface (34) of the circumferential wall (32) is essentially rotationally symmetrical over the entire axial extension region of the circumferential wall (32).

4. The soil processing roller according to any one of claims 1-3,
**characterized in that,** when designing the inner surface (34) of the circumferential wall (32) with a radial distance (R) from the roller axis of rotation (W) which increases in the direction of the roller axis of rotation (W) toward the lubricant drain opening (56) open to the at least one lubricant collecting volume (58), the radial distance (R) increases substantially in a constant manner in the direction of the roller axis of rotation (W).

5. The soil processing roller according to any one of claims 1-4,
**characterized in that,** when designing the inner surface (34) of the circumferential wall (32) with a radial distance (R) from the roller axis of rotation (W) which increases in the circumferential direction around the roller axis of rotation (W) toward the lubricant drain opening (56) open to the at least one lubricant collecting volume (58), the inner surface (34) of the circumferential wall (32) is essentially cylindrical at least in the axial region of the lubricant collecting volume (58).

6. The soil processing roller according to claim 5,
**characterized in that** the inner surface (34) of the circumferential wall (32) is essentially cylindrical over the entire axial extension region of the circumferential wall (32).

7. The soil processing roller according to any one of claims 1-6,
**characterized in that,** when designing the inner surface (34) of the circumferential wall (32) with a radial distance (R) from the roller axis of rotation (W) which increases in the circumferential direction around the roller axis of rotation (W) toward the lubricant drain opening (56) open to the at least one lubricant collecting volume (58), the inner surface (34) of the circumferential wall (32) has a polygonal cross-sectional contour at least in the axial region of the lubricant collecting volume (58), wherein at least a part of the at least one lubricant collecting volume (58) is formed in a corner region of the polygonal cross-sectional contour.

8. The soil processing roller according to any one of claims 1-6,
**characterized in that** when designing the inner surface (34) of the circumferential wall (32) with a radial distance (R) to the roller axis of rotation (W) which increases in the circumferential direction around the roller axis of rotation (W) toward the lubricant drain opening (56) open to the at least one lubricant collecting volume (58), the inner surface (34) of the circumferential wall (32) has a cross-sectional contour at least in the axial region of the lubricant collecting volume (58) with a substantially constant radial distance (R) from the roller axis of rotation (W) in a first circumferential extension region (U₁) and has, in a second circumferential extension region (U₂) adjoining the first circumferential extension region (U₁) in both circumferential directions up to a distance apex (64), a preferably continuously increasing radial distance (R) from the roller axis of rotation (W), wherein at least a part of the at least one lubricant collecting volume (58) is formed in the region of the distance apex (64).

9. The soil processing roller according to any one of claims 1-6,
**characterized in that,** when designing the inner surface (34) of the circumferential wall (32) with a radial distance (R) to the roller axis of rotation (W) increasing in the circumferential direction around the roller axis of rotation (W) toward the lubricant drain opening (56) open to the at least one lubricant collecting volume (58), the inner surface (34) of the circumferential wall (32) has, at least in the axial region of the lubricant collecting volume (58), a cross-sectional contour with, starting from a minimum distance (66), in both directions to a distance apex (64), a preferably continuously increasing radial distance (R) from the roller axis of rotation (W), wherein at least a part of the at least one lubricant collecting volume (58) is formed in the region of the distance apex (64).

10. The soil processing roller according to claim 9,
**characterized in that** the distance minimum (66) is essentially diametrically opposite the distance apex (64) with respect to the roller axis of rotation (W).

11. The soil processing roller according to any one of claims 1-10,
**characterized in that,** when designing the inner surface (34) of the circumferential wall (32) with a radial distance (R) to the roller axis of rotation (W) which increases in the circumferential direction around the roller axis of rotation (W) toward the lubricant drain opening (56) open to the at least one lubricant collecting volume (58), the inner surface (34) of the circumferential wall (32) has a step-like radial widening (68) at least in the axial region of the lubricant collecting volume (58), for providing at least a part of the at least one lubricant collecting volume (58).

12. The soil processing roller according to any one of claims 1-11,
**characterized in that** at least one support element (28, 30) having at least one lubricant drain opening (56) is connected to the circumferential wall (32) by a weld (60, 62) which runs in the circumferential direction around the roller axis of rotation (W), preferably without interruption.

13. The soil processing roller according to claim 12,
**characterized in that** the weld (60) is formed at least on a radial inner side of the circumferential wall (32), and **in that** the inner surface (34) of the circumferential wall (32) in the region of the at least one lubricant drain opening (56) is arranged radially outside of the at least one lubricant drain opening (56) and has a radial distance (D) from the lubricant drain opening (56).

14. The soil processing roller according to any one of claims 1-13,
**characterized in that** an unbalance arrangement (38) with at least one unbalance mass (54) rotatable about an unbalance axis of rotation is arranged in the lubricant receiving volume (36).

15. The soil processing roller according to claim 14,
**characterized in that** the at least one unbalance mass (54) is arranged on an unbalance shaft (40) which is rotatably mounted in both axial end regions via bearing arrangements (44) with respect to the support elements (28, 30).

16. A soil processing machine, in particular a soil compactor, comprising at least one soil processing roller (22) according to any one of the preceding claims.

## Revendications

1. Un rouleau de traitement du sol pour une machine de traitement du sol, en particulier un compacteur de sol, comprenant une enveloppe de rouleau (24) qui est allongée dans la direction d'un axe de rotation du rouleau (W) et entoure l'axe de rotation du rouleau (W), deux éléments de support en forme de disque (28, 30) disposés à distance l'un de l'autre dans la direction de l'axe de rotation du rouleau (W) et reliés à un côté intérieur (26) de l'enveloppe du rouleau (24), et une paroi circonférentielle (32) s'étendant dans la direction de l'axe de rotation du rouleau (W) entre les éléments de support (28, 30) et les jouxtant, dans lequel une surface intérieure (34) de la paroi circonférentielle (32) ainsi que les éléments de support (28, 30) délimitent un volume de réception de lubrifiant (36), dans lequel, dans au moins un des éléments de support (28, 30), au moins une ouverture d'évacuation de lubrifiant (56) est prévue, qui est ouverte vers le volume de réception de lubrifiant (36), dans lequel ledit au moins un volume de collecte de lubrifiant (58) est formé dans le volume de réception de lubrifiant (36), dans lequel le au moins un volume de collecte de lubrifiant (58) peut être vidé via une ouverture d'évacuation de lubrifiant (56) qui est ouverte vers le même volume de réception de lubrifiant,
**caractérisé en ce que,** pour fournir le volume de collecte de lubrifiant (58) :
- la surface intérieure (34) de la paroi circonférentielle (32) a une distance radiale (R) de l'axe de rotation du rouleau (W) qui augmente dans la direction de l'axe de rotation du rouleau (W) vers l'ouverture d'évacuation de lubrifiant (56) qui est ouverte vers ledit au moins un volume de collecte de lubrifiant (58),
et/ou
- la surface intérieure (34) de la paroi circonférentielle (32) a une distance radiale (R) de l'axe de rotation du rouleau (W) qui augmente dans la direction circonférentielle autour de l'axe de rotation du rouleau (W) vers l'ouverture d'évacuation de lubrifiant (56) qui est ouverte vers ledit au moins un volume de collecte de lubrifiant (58).

2. Le rouleau de traitement du sol selon la revendication 1,
**caractérisé en ce que,** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la surface intérieure (34) de la paroi circonférentielle (32) est essentiellement symétrique en rotation par rapport à l'axe de rotation du rouleau (W), au moins dans la région axiale du volume de collecte de lubrifiant (58).

3. Le rouleau de traitement du sol selon la revendication 2,
**caractérisé en ce que** la surface intérieure (34) de la paroi circonférentielle (32) est essentiellement symétrique en rotation sur toute la région d'extension axiale de la paroi circonférentielle (32).

4. Le rouleau de traitement du sol selon l'une des revendications 1 à 3,
**caractérisé en ce que,** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la distance radiale (R) augmente sensiblement de manière constante dans la direction de l'axe de rotation du rouleau (W).

5. Le rouleau de traitement du sol selon l'une des revendications 1 à 4,
**caractérisé en ce que,** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la surface intérieure (34) de la paroi circonférentielle (32) est essentiellement cylindrique au moins dans la région axiale du volume de collecte de lubrifiant (58).

6. Le rouleau de traitement du sol selon la revendication 5,
**caractérisé en ce que** la surface intérieure (34) de la paroi circonférentielle (32) est essentiellement cylindrique sur toute la région d'extension axiale de la paroi circonférentielle (32).

7. Le rouleau de traitement du sol selon l'une des revendications 1 à 6,
**caractérisé en ce que,** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la surface intérieure (34) de la paroi circonférentielle (32) a un contour de section transversale polygonale au moins dans la région axiale du volume de collecte de lubrifiant (58), dans lequel au moins une partie dudit au moins un volume de collecte de lubrifiant (58) est formée dans une région d'angle du contour de section transversale polygonale.

8. Le rouleau de traitement du sol selon l'une des revendications 1 à 6,
**caractérisé en ce que** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la surface intérieure (34) de la paroi circonférentielle (32) a un contour de section transversale au moins dans la région axiale du volume de collecte de lubrifiant (58) avec une distance radiale (R) sensiblement constante de l'axe de rotation du rouleau (W) dans une première région d'extension circonférentielle (U₁) et a, dans une deuxième région d'extension circonférentielle (U₂) adjacente à la première région d'extension circonférentielle (U₁) dans les deux directions circonférentielles jusqu'à un sommet de distance (64), une distance radiale (R) de préférence continuellement croissante par rapport à l'axe de rotation du rouleau (W), dans laquelle au moins une partie dudit au moins un volume collecteur de lubrifiant (58) est formée dans la région du sommet de distance (64).

9. Le rouleau de traitement du sol selon l'une des revendications 1 à 6,
**caractérisé en ce que,** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la surface intérieure (34) de la paroi circonférentielle (32) a, au moins dans la région axiale du volume de collecte de lubrifiant (58), un contour de section transversale avec, à partir d'une distance minimale (66), dans les deux directions jusqu'à un sommet de distance (64), une distance radiale (R) de préférence continuellement croissante de l'axe de rotation du rouleau (W), dans lequel au moins une partie dudit au moins un volume de collecte de lubrifiant (58) est formée dans la région du sommet de distance (64).

10. Le rouleau de traitement du sol selon la revendication 9,
**caractérisé en ce que** la distance minimale (66) est essentiellement diamétralement opposée au sommet de distance (64) par rapport à l'axe de rotation du rouleau (W).

11. Le rouleau de traitement du sol selon l'une des revendications 1 à 10,
**caractérisé en ce que,** lors de la conception de la surface intérieure (34) de la paroi circonférentielle (32) avec une distance radiale (R) de l'axe de rotation du rouleau (W) qui augmente dans la direction de l'axe de rotation du rouleau (W) vers l'ouverture d'évacuation de lubrifiant (56) ouverte vers ledit au moins un volume de collecte de lubrifiant (58), la surface intérieure (34) de la paroi circonférentielle (32) présente un élargissement radial en escalier (68) au moins dans la région axiale du volume de collecte de lubrifiant (58), pour fournir au moins une partie dudit au moins un volume de collecte de lubrifiant (58).

12. Le rouleau de traitement du sol selon l'une des revendications 1 à 11,
**caractérisé en ce qu'**au moins un élément de support (28, 30) ayant au moins une ouverture d'évacuation de lubrifiant (56) est relié à la paroi circonférentielle (32) par une soudure (60, 62) qui s'étend dans la direction circonférentielle autour de l'axe de rotation du rouleau (W), de préférence sans interruption.

13. Le rouleau de traitement du sol selon la revendication 12,
**caractérisé en ce que** la soudure (60) est formée au moins sur un côté radial intérieur de la paroi circonférentielle (32), et **en ce que** la surface intérieure (34) de la paroi circonférentielle (32) dans la région d'au moins une ouverture d'évacuation de lubrifiant (56) est disposée radialement à l'extérieur dudit au moins une ouverture d'évacuation de lubrifiant (56) et présente une distance radiale (D) par rapport à l'ouverture d'évacuation de lubrifiant (56).

14. Le rouleau de traitement du sol selon l'une des revendications 1 à 13,
**caractérisé en ce qu'**un dispositif de balourd (38) avec au moins une masse de balourd (54) rotative autour d'un axe de rotation de balourd est disposé dans le volume de réception de lubrifiant (36).

15. Le rouleau de traitement du sol selon la revendication 14,
**caractérisé en ce que** ledit au moins une masse de balourd (54) est disposée sur un arbre de déséquilibre (40) qui est monté rotatif dans les deux régions d'extrémité axiale par l'intermédiaire de paliers (44) par rapport aux éléments de support (28, 30).

16. Une machine de traitement du sol, en particulier compacteur de sol, comprenant au moins un rouleau de traitement du sol (22) selon l'une des revendications précédentes.
